# EUROPÄISCHE PATENTSCHRIFT

(11) **EP 1 476 116 B1**
(45) Veröffentlichungstag und Bekanntmachung des Hinweises auf die Patenterteilung: **26.03.2008**
(21) Anmeldenummer: 03702525.1
(22) Anmeldetag: 24.01.2003
(51) Int. Cl.: A61J 1/05, B29C 65/18

(54) **FLEXIBLER BEHÄLTER MIT ZUGANGSPORT; VERFAHREN ZUM HERSTELLEN EINES SOLCHEN BEHÄLTERS UND SCHWEISSWERKZEUG ZUR DURCHFÜHRUNG EINES SOLCHEN VERFAHRENS**
FLEXIBLE CONTAINER WITH AN ACCESS PORT, METHOD FOR THE PRODUCTION OF SAID CONTAINER AND WELDING TOOL FOR IMPLEMENTING SAID METHOD
CONTENANT SOUPLE POURVU D'UN ORIFICE D'ACCES, PROCEDE DE FABRICATION ASSOCIE ET OUTIL DE SOUDAGE NECESSAIRE A LA REALISATION DE CE PROCEDE

(30) Priorität: 18.02.2002 DE 10206738
(43) Veröffentlichungstag der Anmeldung: 17.11.2004
(73) Patentinhaber: Fresenius Medical Care Deutschland GmbH, 61352 Bad Homburg v.d.H. (DE)
(72) Erfinder: KUGELMANN, Franz, 66606 St. Wendel-Bliesen (DE)
(74) Vertreter: Laufhütte, Dieter
(86) Internationale Anmeldenummer: PCT/EP2003/000741
(87) Internationale Veröffentlichungsnummer: WO 2003/068134

(56) Entgegenhaltungen:
- EP-A- 0 269 419
- EP-A- 1 072 531
- WO-A-98/09872
- GB-A- 773 342

## Beschreibung

Die Erfindung betrifft das Gebiet von flexiblen Behältern, bei denen ein Zugangsport zum Behälterinneren vorgesehen ist, ein Verfahren zum Herstellen eines solchen Behälters sowie ein Schweißwerkzeug zur Durchführung eines solchen Verfahrens.

Flexible Behälter, insbesondere Beutel, die aus thermoplastischem Folienmaterial hergestellt werden, sind in verschiedenen Anwendungsbereichen weit verbreitet. Für viele Anwendungen weist der flexible Behälter mindestens einen Zugangsport auf, der vom Behälteräußeren zum Behälterinneren führt und zur Entnahme und/oder Befüllung des Behälters dient.

Derartige Behälter sind insbesondere als Beutel ohne großen Aufwand und preiswert herstellbar. Bei medizinischen Anwendungen können sie daher problemlos als Massenartikel mit Wegwerfcharakter zum Einsatz kommen. Der Beutel kann dabei mit einer Flüssigkeit wie z.B. einer Infusions- oder Dialyseflüssigkeit vorgefüllt sein. Es werden auch Leerbeutel eingesetzt, um z.B. während einer medizinischen Behandlung eine Flüssigkeit aufnehmen zu können.

Als Zugangsport kann im einfachsten Fall ein Schlauch dienen, der zwischen zwei Folien z.B. eingeschweißt wird. Die Übergangsstelle der Verbindungsnaht, bei der sie von der Verbindung Folie-Folie auf die Verbindung Folie-Schlauch trifft, muß dabei enormen Spannungen standhalten. Belastungen können durch starke Druckwellen nach dem Fallen des Beutels (Fallfestigkeit) oder auch während der ordnungsgemäßen Benutzung (z.B. hydrostatischer Druck, Infusion mit Druckmanschette) auftreten. Derartige Belastungen können zum Platzen bzw. Aufreißen des Beutels führen, wobei in vielen Fällen die genannte Übergangsstelle der Ausgangspunkt für eine solche Beschädigung ist.

Um die Stabilität im Bereich des Zugangsport zu erhöhen, sind auch Vorrichtungen bekannt, bei denen ein schiffchenartiges Einsatzstück als Zugangsport vorgesehen ist, bei dem ein meist rigider Kunststoffkörper zentral von einer Öffnung durchsetzt ist, die als Zugangsöffnung dient. Daneben schließen sich verjüngende Fortsätze an. Die Folien erfahren auf diese Weise einen stetigeren, tangentialen Verlauf an der Übergangsstelle. Ein solches Einsatzstück erhöht zwar die Stabilität, ist jedoch aufwendiger in der Handhabung und mit höheren Kosten verbunden.

In der EP 0 269 419 B1 ist ein Folienbeutel mit einem schlauchartigen Zugangsport beschrieben, bei dem nach der Verschweißung des Beutels eine rohrartige Manschette um den Schlauchport und die diesen umschließende Folie in einem Spritzgußschritt angebracht wird. Dies erfordert einen weiteren Produktionsschritt sowie zusätzliches Material, was insbesondere für eine Anwendung in großen Stückzahlen nachteilig ist.

GB 773342 offenbart einen flexiblen Behälter mit allen technischen Merkmalen des Oberbegriffs des Anspruchs 1.

Der Erfindung liegt daher die Aufgabe zugrunde, die Stabilität eines flexiblen Behälters an der Stelle eines Zugangsports zu erhöhen, ohne daß dies mit einer nennenswerten Erhöhung an Aufwand und Materialkosten einhergeht.

Die Lösung der Aufgabe gelingt mit den Merkmalen des kennzeichnenden Teils des Anspruchs 1. Vorteilhafte Ausgestaltungen sind in den von diesem Anspruch abhängigen Unteransprüchen genannt.

Der Erfindung liegt die Beobachtung zugrunde, daß sich bei Einbringung eines dreidimensionalen Zugangsports zwischen zwei zweidimensionale Begrenzungsflächen, wie z.B. Folien, Probleme ergeben bzgl. der exakten Abwicklung der Begrenzungsflächen auf die Oberfläche des Zugangsports. Am anschaulichsten läßt sich dies anhand eines als Schlauch ausgebildeten Zugangsport illustrieren, der zwischen zwei Folien gelegt wird und bei dem eine Verbindungsnaht zwischen den Folien direkt über den Schlauch verläuft. Durch das Umlaufen des Schlauchs jeweils längs der Hälfte seines Umfangs verkleinert sich die längs der Verbindungsnaht bestehende Ausdehnung des Behälters bzw. Beutels. Diese Verkleinerung besteht jedoch direkt im Anschluß an das Schlauchende, das in den Beutel mündet, nicht mehr. Der Schlauch ragt dabei - ebenfalls aus produktionstechnischen Gründen - meist in das Beutelinnere hinein.

In der Übergangszone zwischen der Verbindungsnaht und dem Ende des Schlauches bildet sich bei Belastung, die allein durch eine Befüllung hervorgerufen sein kann, eine laschenartige Zone neben der Schweißnaht aus, in der die Folie am Schlauch anliegt. Erst danach hebt die Folie vom Schlauch ab. Die Stabilität in diesem Bereich kann daher durch zusätzliches Verbinden der laschenartige Zone mit dem Schlauch erhöht werden, ohne daß dies mit einem Volumenverlust einhergeht, wie das z.B. bei einer schlichtweg verbreiterten Schweißnaht der Fall wäre. Zusätzlich wird der Kraftkomponente, die bei einer Belastung eine Abschälung an der Übergangsstelle von der Folie zum Schlauch verursacht (der Beutel "versucht", die zur Verfügung stehende Breite zu vergrößern), eine Kraftkomponente entgegengesetzt, die entlang der Schlauchachse und damit senkrecht zur Ausdehnungskraft verläuft. Letztendlich ist es damit im Rahmen der Erfindung relevant, daß die Verbindungsnaht einen Teil des Abschnitts des Zugangsports überdeckt, der in den Behälter hineinragt. Die Verbindungsnaht ragt dabei auf diesem Abschnitt des Zugangsports weiter in das Behälterinnere hinein als in dem sich unmittelbar seitlich an den Zugangsport anschließenden Bereich der Verbindungsnaht.

Diese Maßnahme erfordert lediglich eine einfache Modifizierung des Schweißwerkzeugs, ein zusätzlicher Produktionsschritt ist nicht notwendig. Da die Stabilität des Behälters gesteigert wird, ist es sogar möglich, im Bedarfsfall die Wandstärke des Behältermaterials zu verringern und damit Material einzusparen, solange der somit vorliegende Behälter geforderten Spezifikationen gerecht wird.

Es liegt im Rahmen der Erfindung, daß der erfindungemäße flexible Behälter aus verschiedenen flächenartigen Begrenzungsteilen besteht, bei dem mindestens eins als flexible Folie ausgebildet ist und der Zugangsport zwischen diese Folie und ein zweites flächenartiges Begrenzungsteil eingelegt ist.

In einer vorteilhaften Ausführungsform ist das zweite flächenartige Begrenzungsteil ebenfalls eine flexible Folie.

Der Zugangsport ist im einfachsten Fall als Schlauch ausgebildet. Die Erfindung umfaßt aber auch anders geformte Zugangsports wie z.B. schiffchenartige Einsatzstücke.

In einer weiteren Ausführungsform der Erfindung, bei der der Zugangsport zwischen zwei flexible Folien eingelegt ist, besteht der flexible Behälter aus einem eingeschlagenen Stück Folie sowie einer Längs- und zwei Querverbindungsnähten, wobei der Zugangsport in einer dieser Verbindungsnähte angeordnet ist.

In einer besonders einfach zu handhabenden Ausführungsform besteht der flexible Behälter aus einer Schlauchfolie und zwei Querverbindungsnähten, wobei der Zugangsport in einer dieser Verbindungsnähte angeordnet ist.

Für die Verbindungsnähte stehen alle Formen von permanenten Verbindungsprozessen zur Verfügung. Hier sind insbesondere Schweiß- und Klebenähte zu nennen, wobei dem Schweißen aufgrund der produktionstechnischen Vorteile eine besondere Bedeutung zukommt.

Als Ausgangsmaterial für die flexible Folie des Behälters können unterschiedlichste Materialen dienen, solange sie zur Herstellung von Verbindungsnähten mit den zu verbindenden Materialien geeignet sind. In den meisten Fällen werden dies thermoplastische Kunststoffe sein. Es ist aber auch denkbar, entsprechend dünne Metallfolien zu verwenden.

Der Erfindung liegt auch die Aufgabe zugrunde, ein Verfahren zum Einfügen eines Zugangsports zwischen eine flexible Folie und einem zweiten flächenartigen Begrenzungsteil eines flexiblen Behälters zur Herstellung eines erfindungsgemäßen flexiblen Behälters anzugeben. Die Lösung dieser Aufgabe gelingt durch die Merkmale des kennzeichnenden Teils des unabhängigen Anspruchs 11.

Der Erfindung liegt ebenfalls die Aufgabe zugrunde, ein Schweißwerkzeug zur Durchführung des erfindungsgemäßen Verfahrens zur Herstellung eines erfindungsgemäßen flexiblen Behälters bereitzustellen. Die Lösung gelingt durch ein Schweißwerkzeug mit den Merkmalen des kennzeichnenden Teils des unabhängigen Anspruchs 12.

Die EP 1 072 531 A2 zeigt einen flexiblen Behälter mit einem als Schlauch ausgeführten Zugangsport, bei dem diverse Einschnitte zum Aufreißen und Freigeben des Schlauchports vorgesehen sind. Zusätzlich ist die Verbindungsnaht, die zwischen zwei Folien besteht und über den eingelegten Schlauch verläuft, in Richtung des in den Behälter hineinragenden Teils des Schlauchs verbreitert. Diese Verbreitung verläuft jedoch auch quer zum Schlauch, d.h. auch in dem anschließenden Bereich, wo sie die beiden Folien direkt miteinander verbindet.

In den Zeichnungen wird eine beispielhafte Ausführungsform der Erfindung näher erläutert. Es zeigen:
Figur 1 einen als Schlauchbeutel ausgeführten flexiblen Behälter mit einem als Schlauch vorgesehenen Zugangsport nach dem Stand der Technik,
Figur 2a eine Vergrößerung des Zugangsports von Figur 1,
Figur 2b eine Vergrößerung des Zugangsport nach Figur 2a nach einer Ausführungsform eines erfindungsgemäßen flexiblen Behälters,
Figur 3a die Seitenansicht einer Ausführungsform eines erfindungsgemäßen Schweißwerkzeuges sowie
Figur 3b das Schweißwerkzeug nach Figur 3a in der Draufsicht.

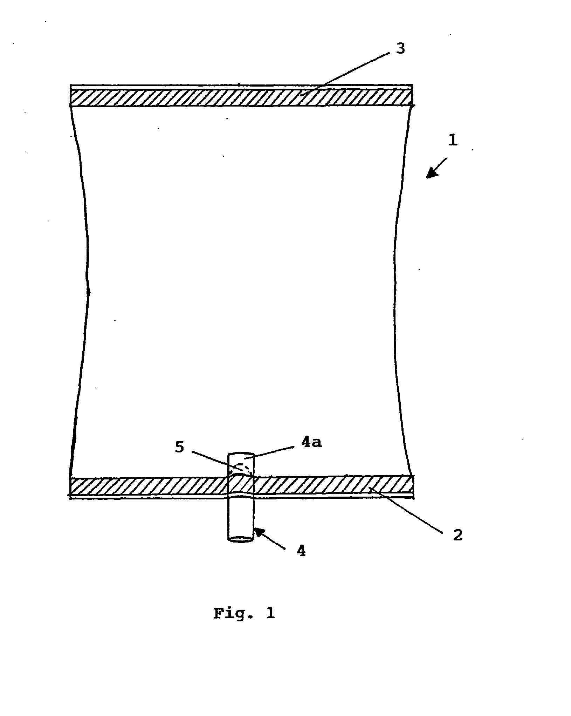

In Figur 1 ist ein flexibler Behälter 1, der aus einer Schlauchfolie hergestellt wurde, nach dem Stand der Technik dargestellt. Der flexible Behälter bzw. Beutel 1 ist durch zwei Querschweißnähte 2 und 3 verschlossen (schraffiert gezeichnet). In die Verbindungsnaht 2 ist ein als Schlauch 4 ausgebildeter Zugangsport vorgesehen, der in dieser Abbildung der Anschauung halber leicht perspektivisch gezeichnet ist. Der Beutel 1 ist mit einem nicht näher dargestellten Medium gefüllt, wodurch sich eine leichte Verjüngung des Beutels in der Beutelmitte in der Draufsicht ergibt. In diesem Fall ist der Zugangsport durch ein ebenfalls nicht näher dargestelltes Siegel verschlossen, das von einem Benutzer im Bedarfsfall geöffnet werden kann.

Der Schlauch 4 ragt mit einem Abschnitt 4a über die Verbindungsnaht 2 in das Behälterinnere. Aufgrund der Befüllung des Beutels schmiegt sich das Folienmaterial längs der gestrichelt verlaufenden Linie in einem Bereich 5 an den Abschnitt 4a des Schlauchs an, obwohl die Verbindungsnaht 2 diesen Bereich nicht umfaßt.

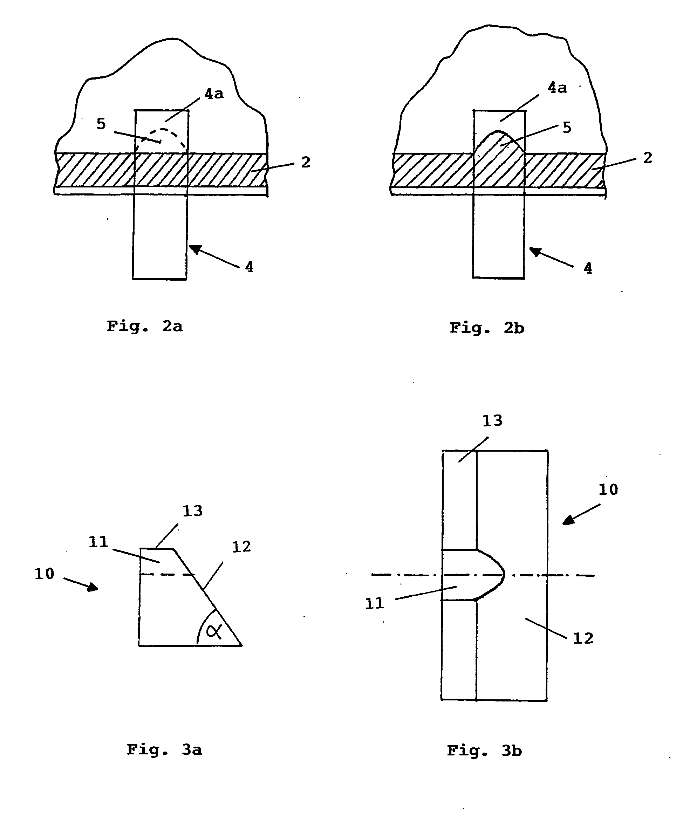

Der Zugangsport ist vergrößert in Figur 2a gezeigt, wobei die perspektivische Darstellung des Schlauches 4 nicht übernommen wurde. Der laschenartige Bereich 5 auf dem Schlauchabschnitt 4a ist deutlich erkennbar.

Figur 2b zeigt diesen Bereich für eine Ausführungsform eines flexiblen Behälters nach dem Wesen der Erfindung. Die Verbindungsnaht 2 umfaßt nun auch den laschenartigen Bereich 5. Dieser kann zusätzlich Kräfte aufnehmen, um die Stabilität dieses Bereiches des Beutels zu erhöhen. Das zur Verfügung stehende Beutelvolumen bleibt praktisch unverändert.

In den Figuren 3a und 3b ist eine Ausführungsform eines Schweißwerkzeugs in der Seiten- und Draufsicht dargestellt, mit dem ein wie in Figur 2b dargestellter Zugangsport zwischen eine flexible Folie und einem zweiten flächenartigen Begrenzungsteil eines flexiblen Behälters eingefügt werden kann. Dazu ist ein blockartiger Substratkörper 10 vorgesehen, der eine erste Oberfläche 13 aufweist, in die eine Nut 11 mit einem halbkreisförmigen Profil eingelassen ist. Der Radius des Halbkreises ergibt sich aus dem Radius des einzuschweißenden Schlauches 4.

Der blockartige Substratkörper weist außerdem eine zweite Oberfläche 12 auf, die um einen spitzen Winkel α gegenüber der Richtung geneigt ist, in der die Nut 11 bzw. die erste Oberfläche 13 verläuft. Der Substratkörper, insbesondere die Fläche der Nut 11 und die erste Oberfläche 13, sind für eine Wärmekontaktschweißung aufheizbar.

Das Schweißwerkzeug 10 wird unter Anwendung des erfindungsgemäßen Verfahrens zum Einfügen eines Zugangsports zwischen eine flexible Folie und einem zweiten flächenartigen Begrenzungsteil eines flexiblen Behälters wie folgt eingesetzt:

Zunächst wird der als Schlauch 4 ausgebildete Zugangsport zwischen der Folie und dem zweiten Begrenzungsteil positioniert. Das Schweißwerkzeug 10 wird dann von der Seite der Folie so angelegt, daß die zu erstellende Verbindungsnaht 2 über der ersten Oberfläche 13 verläuft und der Schlauch 4 längs der Nut 11 eingelegt wird, wobei zwischen der Nut 11 und dem Schlauch 4 die Folie verläuft. Die zweite Oberfläche 12 ist dabei zum Behälterinneren hin abgeschrägt. Von der Seite des zweiten Begrenzungsteils sorgt eine entsprechend geformtes, nicht näher dargestelltes Gegenstück für eine ausreichende Fixierung. Sollte das zweite Begrezungsteils ebenfalls als flexible Folie ausgebildet sein, wird zweckmäßigerweise ein zweites Schweißwerkzeug 10 entsprechend spiegelsymmetrisch an die zweite Folie verfahren. Der anschließende Schweißvorgang längs der heizbaren Flächen sorgt für die Ausbildung einer Verbindungsnaht 2, die ein Profil wie in Figur 2b dargestellt aufweist.

Der Winkel α kann je nach Anwendung einen optimierten Wert haben. Es hat sich als besonders vorteilhaft erwiesen, wenn er zwischen 30 und 60 Grad liegt (wobei ein rechter Winkel 90 Grad beträgt).

Mit Hilfe der Erfindung ist es damit möglich, die Stabilität eines flexiblen Behälters im Bereich eines Zugangsport wesentlich zu erhöhen, ohne daß dies mit einer aufwendigen Produktionstechnik oder höheren Materialkosten einhergeht. Erste Versuche mit einem erfindungsgemäßen Behälter haben bereits zu einer deutlichen Verbesserung der Fallfestigkeit geführt. Bei gleichbleibender Stabilität kann sogar eine Einsparung von Material erreicht werden.

## Patentansprüche

1. Flexibler Behälter (1) mit einem Zugangsport (4), bei dem eine flexible Folie und ein zweites flächenartiges Begrenzungsteil längs einer Verbindungsnaht (2) miteinander verbunden sind und wobei die Verbindungsnaht (2) einen Zugangsport (4) überzieht, der zwischen der Folie und dem Begrenzungsteil angeordnet ist und einen Zugang vom Behälteräußeren zum Behälterinneren darstellt, wobei der Zugangsport (4) einen Abschnitt (4a) aufweist, der die Verbindungsnaht (2) in Richtung zum Behälterinneren überragt,
**dadurch gekennzeichnet,**
**daß** die Verbindungsnaht (2) an der Stelle, an der sie den Zugangsport (4) mit der Folie verbindet, in Richtung des überragenden Abschnitts (4a) des Zugangsports (4) fortgebildet ist, um ebenfalls einen Teil (5) dieses Abschnitts (4a) des Zugangsports (4) mit der Folie zu verbinden.

2. Flexibler Behälter nach Anspruch 1, **dadurch gekennzeichnet, daß** das zweite flächenartige Begrenzungsteil ebenfalls eine flexible Folie ist.

3. Flexibler Behälter nach Anspruch 1 oder 2, **dadurch gekennzeichnet, daß** der Zugangsport (4) ein Schlauch ist.

4. Flexibler Behälter nach Anspruch 1 oder 2, **dadurch gekennzeichnet, daß** der Zugangsport ein schiffchenartiges Einsatzstück mit mindestens einer Zugangsöffnung ist.

5. Flexibler Behälter nach einem der vorhergehenden Ansprüche, **dadurch gekennzeichnet, daß** der Behälter aus einem eingeschlagenen Stück Folie sowie einer Längs- und zwei Querverbindungsnähten gebildet ist, wobei der Zugangsport in einer dieser Verbindungsnähte angeordnet ist.

6. Flexibler Behälter nach einem der Ansprüche 1 bis 4, **dadurch gekennzeichnet, daß** der Behälter (1) aus einer Schlauchfolie und zwei Querverbindungsnähten (2, 3) gebildet ist, wobei der Zugangsport (4) in einer dieser Verbindungsnähte angeordnet ist.

7. Flexibler Behälter nach einem der vorhergehenden Ansprüche, **dadurch gekennzeichnet, daß** die Verbindungsnähte (2) Schweißnähte sind.

8. Flexibler Behälter nach einem der Ansprüche 1 bis 6, **dadurch gekennzeichnet, daß** die Verbindungsnähte (2) Klebenähte sind.

9. Flexibler Behälter nach einem der vorhergehenden Ansprüche, **dadurch gekennzeichnet, daß** der Teil (5) der Verbindungsnaht (2), der den überragenden Abschnitt (4a) des Zugangsport (4) zum Teil mit der Folie verbindet, laschenartig ausgeführt ist.

10. Flexibler Behälter nach Anspruch 9, **dadurch gekennzeichnet, daß** die laschenartige Fortbildung (5) der Verbindungsnaht (2) ein Profil aufweist, das der Schnittlinie zwischen einer halbkreisförmigen Nut (11) und einer zur Nut um einen spitzen Winkel - vorzugsweise um 30 bis 60 Grad - geneigt verlaufenden Ebene (12) entspricht.

11. Verfahren zum Einfügen eines Zugangsports (4) zwischen einer flexiblen Folie und einem zweiten flächenartigen Begrenzungsteil eines flexiblen Behälters (1), bei dem der Zugangsport (4) zwischen der Folie und dem Begrenzungsteil positioniert wird, die Folie und das Begrenzungsteil längs einer Verbindungsnaht (2), die den Zugangsport (4) überzieht, miteinander verbunden werden, wobei der Zugangsport (4) die Verbindungsnaht (2) in mindestens eine Richtung durch einen Abschnitt (4a) überragt,
**dadurch gekennzeichnet,**
**daß** als Teil der Verbindungsnaht (2) auch die Folie und Teile (5) des überragenden Abschnitts (4a) des Zugangsports (4) miteinander verbunden werden.

12. Verfahren nach Anspruch 11, **dadurch gekennzeichnet, daß** die Verbindungsnaht (2) geschweißt wird.

13. Schweißwerkzeug (10) zur Durchführung des Verfahrens nach Anspruch 12, das aus einem blockähnlichen Substrat besteht, das eine in einer ersten Oberfläche (13) verlaufende Nut (11) mit den Konturen des Zugangsport (4) aufweist, wobei sowohl die erste Oberfläche (13) wie auch die Konturen der Nut (11) als Heizflächen zum Wärmekontaktschweißen ausgebildet sind,
**dadurch gekennzeichnet,**
**daß** die Nut (11) durch eine zweite Oberfläche (12) des Substrates begrenzt wird, die zur ersten Oberfläche (13) einen spitzen Neigewinkel aufweist.

14. Schweißwerkzeug nach Anspruch 13, **dadurch gekennzeichnet, daß** die Nut (11) eine halbkreisförmiges Profil zur Aufnahme der längsverlaufenden Hälfte eines als Schlauch ausgebildeten Zugangsports (4) hat.

15. Schweißwerkzeug nach Anspruch 13 oder 14, **dadurch gekennzeichnet, daß** der spitze Neigewinkel zwischen 30 und 60 Grad liegt.

## Claims

1. A flexible container (1) having an access port (1), in which a flexible film and a second sheet-like boundary part are connected together along a connecting seam (2), and wherein the connecting seam (2) extends over an access port (4) which is arranged between the film and the boundary part and represents an access from the exterior of the container to the interior of the container, wherein the access port (4) has a portion (4a) which projects beyond the connecting seam (2) in a direction towards the interior of the container,
**characterised in that**
at the location at which the connecting seam connects the access port (4) to the film the connecting seam (2) is extended in the direction of the projecting portion (4a) of the access port (4) in order also to connect a part (5) of said portion (4) of the access port (4) to the film.

2. A flexible container according to claim 1 **characterised in that** the second sheet-like boundary part is also a flexible film.

3. A flexible container according to claim 1 or claim 2 **characterised in that** the access port (4) is a hose.

4. A flexible container according to claim 1 or claim 2 **characterised in that** the access port is a boat-like insert portion with at least one access opening.

5. A flexible container according to one of the preceding claims **characterised in that** the container is formed from a folded-over piece of film and a longitudinal and two transverse connecting seams, wherein the access port is arranged in one of said connecting seams.

6. A flexible container according to one of claims 1 to 4 **characterised in that** the container (1) is formed from a tubular film and two transverse connecting seams (2, 3), wherein the access port (4) is arranged in one of said connecting seams.

7. A flexible container according to one of the preceding claims **characterised in that** the connecting seams (2) are welded seams.

8. A flexible container according to one of claims 1 to 6 **characterised in that** the connecting seams are adhesive seams.

9. A flexible container according to one of the preceding claims **characterised in that** the part (5) of the connecting seam (2), which partly connects the projecting portion (4a) of the access port (4) to the film, is of a tab-like configuration.

10. A flexible container according to claim 9 **characterised in that** the tab-like extension (5) of the connecting seam (2) is of a profile which corresponds to the section line between a semicircular groove (11) and a plane (12) extending inclinedly relative to the groove through an acute angle - preferably through 30 to 60 degrees.

11. A method of inserting an access port (4) between a flexible film and a second sheet-like boundary part of a flexible container (1), in which the access port (4) is positioned between the film and the boundary part, the film and the boundary part are connected together along a connecting seam (2) which extends over the access port (4), wherein the access port (4) projects beyond the connecting seam (2) in at least one direction by a portion (4a),
**characterised in that**
as part of the connecting seam (2) the film and parts (5) of the projecting portion (4a) of the access port (4) are connected together.

12. A method according to claim 11 **characterised in that** the connecting seam (2) is welded.

13. A welding tool (10) for carrying out the method according to claim 12 which comprises a block-like substrate having a groove (11) extending in a first surface (13) and having the contours of the access port (4), wherein both the first surface (13) and also the contours of the groove (11) are in the form of heating surfaces for thermal contact welding,
**characterised in that**
the groove (11) is delimited by a second surface (12) of the substrate which is at an acute angle of inclination relative to the first surface (13).

14. A welding tool according to claim 13 **characterised in that** the groove (11) is of a semicircular profile for receiving the longitudinally extending half of an access port (4) which is in the form of a hose.

15. A welding tool according to claim 13 or claim 14 **characterised in that** the acute angle of inclination is between 30 and 60 degrees.

## Revendications

1. Contenant flexible (1) avec un orifice d'accès (4), dans lequel une feuille flexible et une deuxième partie de délimitation plane sont reliées le long d'un joint de liaison (2), et où le joint de liaison (2) recouvre un orifice d'accès (4) qui est disposé entre la feuille et la partie de délimitation et qui représente un accès de l'extérieur du contenant à l'intérieur du contenant, où l'orifice d'accès (4) présente une section (4a) qui fait saillie sur le joint de liaison (2) dans la direction de l'intérieur du contenant,
**caractérisé**
**en ce que** le joint de liaison (2), à l'emplacement où il relie l'orifice d'accès (4) à la feuille, est prolongé en direction de la section saillante (4a) de l'orifice d'accès (4) pour relier également une partie (5) de cette section (4a) de l'orifice d'accès (4) à la feuille.

2. Contenant flexible selon la revendication 1, **caractérisé en ce que** la deuxième partie de délimitation plane est également une feuille flexible.

3. Contenant flexible selon la revendication 1 ou 2, **caractérisé en ce que** l'orifice d'accès (4) est un tuyau.

4. Contenant flexible selon la revendication 1 ou 2, **caractérisé en ce que** l'orifice d'accès est une pièce d'insertion semblable à une navette avec au moins une ouverture d'accès.

5. Contenant flexible selon l'une des revendications précédentes, **caractérisé en ce que** le contenant est formé par une pièce de feuille repliée et un joint de liaison longitudinal et deux joints de liaison transversaux, où l'orifice d'accès est disposé dans un de ces joints de liaison.

6. Contenant flexible selon l'une des revendications 1 à 4, **caractérisé en ce que** le contenant (1) est formé par une feuille tubulaire et deux joints de liaison transversaux (2, 3), où l'orifice d'accès (4) est disposé dans un de ces joints de liaison.

7. Contenant flexible selon l'une des revendications précédentes, **caractérisé en ce que** les joints de liaison (2) sont des soudures.

8. Contenant flexible selon l'une des revendications 1 à 6, **caractérisé en ce que** les joints de liaison (2) sont des joints de collage.

9. Contenant flexible selon l'une des revendications précédentes, **caractérisé en ce que** la partie (5) du joint de liaison (2), qui relie la section saillante (4a) de l'orifice d'accès (4) en partie à la feuille, est réalisée en forme de languette.

10. Contenant flexible selon la revendication 9, **caractérisé en ce que** le prolongement en forme de languette (7) du joint de liaison (2) présente un profil qui correspond à la ligne de coupe entre une rainure semi-circulaire (11) et un plan (12) incliné relativement à la rainure selon un angle aigu, de préférence de 30 à 60 degrés.

11. Procédé d'insertion d'un orifice d'accès (4) entre une feuille flexible et une deuxième partie de délimitation plane d'un contenant flexible (1), où l'orifice d'accès (4) est positionné entre la feuille et la partie de délimitation, la feuille et la partie de délimitation sont reliées une à l'autre le long d'un joint de liaison (2) qui recouvre l'orifice d'accès (4), où l'orifice d'accès (4) fait saillie sur le joint de liaison (2) dans au moins une direction par une section (4a),
**caractérisé**
**en ce que** comme partie du joint de liaison (2), également la feuille et les parties (5) de la section saillante (4a) de l'orifice d'accès (4) sont reliées entre elles.

12. Procédé selon la revendication 11, **caractérisé en ce que** le joint de liaison (2) est soudé.

13. Outil de soudage (10) pour exécuter le procédé selon la revendication 12, qui est constitué d'un substrat semblable à un bloc, qui présente une rainure (11) s'étendant dans une première surface, avec les contours de l'orifice d'accès (4), où à la fois la première surface (13) et aussi les contours de la rainure (11) sont réalisés comme faces chauffantes pour le soudage par contact thermique,
**caractérisé**
**en ce que** la rainure (11) est délimitée par une deuxième surface (12) du substrat qui présente un angle d'inclinaison aigu relativement à la première surface (13).

14. Outil de soudage selon la revendication 13, **caractérisé en ce que** la rainure (11) présente un profil semi-circulaire pour la réception de la moitié s'étendant longitudinalement d'un orifice d'accès (4) réalisé comme tuyau.

15. Outil de soudage selon la revendication 13 ou 14, **caractérisé en ce que** l'angle d'inclinaison aigu se situe entre 30 et 60 degrés.
